(19) Europäisches Patentamt
European Patent Office
Office européen des brevets

(11) EP 0 641 163 B1

(12) **EUROPEAN PATENT SPECIFICATION**

(45) Date of publication and mention of the grant of the patent:
**11.09.1996 Bulletin 1996/37**

(21) Application number: **93910193.7**

(22) Date of filing: **13.05.1993**

(51) Int. Cl.$^6$: **A01N 43/653**
// (A01N43/653, 43:54)

(86) International application number:
**PCT/GB93/00984**

(87) International publication number:
**WO 93/22921 (25.11.1993 Gazette 1993/28)**

# (54) FUNGICIDAL COMPOSITION

FUNGIZIDE ZUSAMMENSETZUNG

COMPOSITION FONGICIDE

(84) Designated Contracting States:
**AT BE CH DE ES FR GB GR IE IT LI NL PT**

(30) Priority: **21.05.1992 GB 9210830**

(43) Date of publication of application:
**08.03.1995 Bulletin 1995/10**

(73) Proprietor: **ZENECA LIMITED**
**London W1Y 6LN (GB)**

(72) Inventors:
- **BROWNELL, Keith, Harvey**
  **Rocky Mount, NC 27804 (US)**
- **GODWIN, Jeremy, Robert**
  **7 Wantage Road**
  **Camberley Surrey GU15 4DZ (GB)**
- **HEANEY, Stephen, Paul**
  **11 Lillybrooke Crescent**
  **Berkshire SL6 3XJ (GB)**
- **SKIDMORE, Anthony, Michael**
  **4 Liddell Close**
  **Wokingham Berkshire RG11 4NS (GB)**

(74) Representative: **Tierney, Francis John et al**
**Intellectual Property Department,**
**ZENECA Agrochemicals,**
**Jealotts Hill Research Station,**
**P.O. Box 3538**
**Bracknell, Berkshire RG12 6YA (GB)**

(56) References cited:
**EP-A- 0 382 375** **EP-A- 0 415 569**

- **RESEARCH DISCLOSURE no. 338, 10 June 1992, HAVANT GB pages 506 - 510 ANONYMOUS 'Mixtures of Fungicides and Insecticides' disclosure no. 33893**
- **DATABASE WPIL Week 9313, Derwent Publications Ltd., London, GB; AN 93-107493**
- **RESEARCH DISCLOSURE no. 346, 10 February 1993 Havant GB**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 641 163 B1

## Description

The present invention relates to a fungicidal composition and to methods of using the composition to combat fungal infections of plants.

(E)-Methyl 2-[2-(6-(2-cyanophenoxy)pyrimidin-4-yloxy)phenyl]-3-methoxypropenoate, its use as a fungicide, compositions containing it, and methods of using it to combat fungal infections of plants are disclosed in EP-A2-0382375.

The present invention provides a fungicidal composition comprising a carrier or diluent; a first active ingredient which is a compound of formula (I), [(E)-methyl 2-[2-(6-(2-cyanophenoxy)pyrimidin-4-yloxy)phenyl]-3-methoxypropenoate], and a second active ingredient which is a compound of formula (II) wherein $R^1$ is $C_{1-4}$ alkyl or $C_{3-6}$ cycloalkyl($C_{1-4}$)alkyl; and $R^2$ is phenyl or phenyl($C_{1-4}$)alkyl; wherein the foregoing phenyl moieties are substituted with halogen; the relative amounts of the first and second active ingredients being such as to produce a synergistic effect.

Alkyl and the alkyl moieties of $C_{3-6}$ cycloalkyl($C_{1-4}$)alkyl and phenyl($C_{1-4}$)alkyl are in the form of straight or branched chains, and are, for example, methyl, ethyl, n-butyl or tert-butyl.

Cycloalkyl is, for example, cyclopropyl.

Halogen is preferably fluorine or chlorine.

The foregoing phenyl moieties are preferably 2- or 4- monosubstituted or 2,4- disubstituted.

In one aspect the present invention provides a fungicidal composition wherein the second active ingredient is a compound of formula (II) in which $R^1$ is a butyl group (especially n-butyl or tert-butyl) or 1-(cyclopropyl)eth-1-yl; and $R^2$ is mono- or di-chlorophenyl (especially 4-chlorophenyl or 2,4-dichlorophenyl) or monochlorophenyl($C_{1-2}$)alkyl (especially 2-chlorobenzyl or 2-(4-chlorophenyl)eth-1-yl).

In a further aspect the compound of formula (II) is a compound wherein $R^1$ is n-butyl and $R^2$ is 2,4-dichlorophenyl, or $R^1$ is tert-butyl and $R^2$ is 2-chlorobenzyl or 2-(4-chlorophenyl)eth-1-y1.

In another aspect there is provided a composition wherein the weight ratio of the first active ingredient to the second active ingredient is in the range from 400:1 to 10:90.

In a further aspect there is provided a fungicidal composition comprising a carrier or diluent; a first active ingredient which is a compound of formula (I), and a second active ingredient which is a compound of formula (III); the relative amounts of the first and second active ingredients being such as to produce a synergistic effect, for example the weight ratio of the first active ingredient to the second active ingredient is in the range from 98:2 to 25:75, for example 9:1 to 25:75, and 98:2 to 9:1.

In a still further aspect there is provided a fungicidal composition comprising a carrier or diluent, a first active ingredient which is a compound of formula (I), and a second active ingredient which is a compound of formula (IV); the relative amounts of the first and second active ingredients being such as to produce a synergistic effect, for example the weight ratio of the first active ingredient to the second active ingredient is in the range from 400:1 to 10:90.

The compositions may be used to control one or more of the following pathogens: Pyricularia oryzae on rice and wheat and other Pyricularia spp. on other hosts.

Puccinia recondita, Puccinia striiformis and other rusts on wheat, Puccinia hordei, Puccinia striiformis and other rusts on barley, and rusts on other hosts e.g. turf, rye, coffee, pears, apples, peanuts, sugar beet, vegetables and ornamental plants.

Erysiphe graminis (powdery mildew) on barley, wheat, rye and turf and other powdery mildews on various hosts such as Sphaerotheca macularis on hops, Sphaerotheca fuliginea on cucurbits (e.g. cucumber), Podosphaera leucotricha on apple and Uncinula necator on vines.

Cochliobolus spp., Helminthosporium spp., Drechslera spp. (Pyrenophora spp.), Rhynchosporium spp., Septoria spp. (including Mycosphaerella graminicola and Leptosphaeria nodorum), Pseudocercosporella herpotrichoides and Gaeumannomyces graminis on cereals (e.g. wheat, barley, rye), turf and other hosts.

Cercospora arachidicola and Cercosporidium personatum on peanuts and other Cercospora species on other hosts, for example, sugar beet, bananas, soya beans and rice.

Botrytis cinerea (grey mould) on tomatoes, strawberries, vegetables, vines and other hosts and other Botrytis spp. on other hosts.

Alternaria spp. on vegetables (e.g. cucumber), oil-seed rape, apples, tomatoes, cereals (e.g. wheat) and other hosts.

Venturia spp. (including Venturia inaequalis (scab)) on apples, pears, stone fruit, tree nuts and other hosts.

Cladosporium spp. on a range of hosts including cereals (e.g. wheat).

Monilinia spp. on stone fruit, tree nuts and other hosts.

Didymella spp. on tomatoes, turf, wheat and other hosts.

Phoma spp. on oil-seed rape, turf, rice, potatoes, wheat and other hosts.

Aspergillus spp. and Aureobasidium spp. on wheat, lumber and other hosts.

Ascochyta spp. on peas, wheat, barley and other hosts.

Plasmopara viticola on vines. Other downy mildews such as Bremia lactucae on lettuce, Peronospora spp. on soybeans, tobacco, onions and other hosts, Pseudoperonospora humuli on hops and Pseudoperonospora cubensis on cucurbits.

Pythium spp. on turf and other hosts.

Phytophthora infestans on potatoes and tomatoes and other Phytophthora spp. on vegetables, strawberries, avocado, pepper, ornamentals, tobacco, cocoa and other hosts.

Thanatephorus cucumeris on rice and turf and other Rhizoctonia species on various hosts such as wheat and barley, vegetables, cotton and turf.

Sclerotinia spp. on turf, peanuts, oil-seed rape and other hosts.

Sclerotium spp. on turf, peanuts and other hosts.

Colletotrichum spp. on a range of hosts including turf, coffee and vegetables.

Laetisaria fuciformis on turf.

Mycosphaerella spp. on banana, peanut, citrus, pecan, papaya and other hosts.

Diaporthe spp. on citrus, soybean, melon, pear, lupin and other hosts.

Elsinoe spp. on citrus, vines, olives, pecans, roses and other hosts.

Pyrenopeziza spp. on oil-seed rape and other hosts.

Oncobasidium theobromae on cocoa causing vascular streak dieback.

Fusarium spp., Typhula spp., Microdochium nivale, Ustilago spp., Urocystis spp., Tilletia spp., and Claviceps purpurea on a variety of hosts but particularly wheat, barley, turf and maize.

Verticillium spp. on a range of hosts including cotton, potatoes, tomatoes and hops.

Ramularia spp. on sugar beet and other hosts.

Post-harvest diseases particularly of fruit (e.g. Pencillium digitatum and P. italicum and Trichoderma viride on oranges, Colletotrichum musae and Gloeosporium musarum on bananas and Botrytis cinerea on grapes).

Other pathogens on vines, notably Eutypa lata, Guignardia bidwellii, Phellinus igniarus, Phomopsis viticola, Pseudopezicula tracheiphila and Stereum hirsutum.

Other pathogens on cereals, notably Selonophoma donacis, Sclerophthora spp., Sclerospora sorghi, Nigrospora oryzae, Trichometasphaeria turcica, Cephalosporium gramineum, Epicoccum spp., Stemphylium spp., Sporobolomyces spp., Cryptosporium spp., Dilophospora alopecuri, Phaeoseptoria urvilleana, Phyllachora graminis, Omphalina pixidata and Platyspora pentamera.

Other pathogens on turf, notably Agaricus spp., Coprinus psychromorbidus, Epichloe typhina, Lepiota spp., Leptosphaeria korrae, Lycoperdon spp., Magnaporthe poae, Marasmius oreades, Myriosclerotinia borealis, Nigrospora sphaerica, Phialophora spp. and Pyricularia grisea.

Other pathogens on lumber, notably Cephaloascus fragrans, Ceratocystis spp., Chaetomium globosum, Coniophora puteana, Coriulus veriscolor, Dothiorella spp., Gliocladium virens, Gloeophyllum trabeum, Ophiostoma piceae, Penicillium spp., Phialophora spp., Phlebia gigantea, Poria placenta, Rhinocladiella atrovirens, Schizophyllum vaillanti, Sclerophoma pityophila, Sistotrema brinkmannii, Sphaeropsis sapina, Trametes veriscolor, Trichoderma pseudokoningii, Trichoderna viride and slime mould.

Fungal vectors of viral diseases e.g. Polymyxa graminis on cereals as the vector of barley yellow mosaic virus (BYMV).

Some of the compositions show a broad range of activities against fungi in vitro.

The active ingredients may move acropetally/locally in plant tissue.

The invention therefore provides a method of combating fungi which comprises applying to a plant, to a seed of a plant or to the locus of the plant or seed a fungicidally effective amount of a composition as hereinbefore defined.

It is preferred that all compositions, both solid and liquid formulations, comprise 0.0001 to 95%, more preferably 1 to 85%, for example 1 to 25% or 25 to 60%, of the first and second active ingredients combined.

When applied to the foliage of plants, the compounds of the invention are applied at rates of 0.1g to 10Kg, preferably 10g to 8Kg, more preferably 10g to 4Kg, of the first and second active ingredients combined per hectare.

When used as seed dressings, the compositions of the invention are used at rates of 0.0001g (for example 0. 001g or 0.05g) to 10g, preferably 0.1g to 8g, more preferably 0.1g to 4g, of the first and second active ingredients combined per kilogram of seed.

The compositions can be applied in a number of ways. For example, they can be applied directly to the foliage of a plant, to seeds or to other medium in which plants are growing or are to be planted, or they can be sprayed on, dusted on or applied as a cream or paste formulation, or they can be applied as a vapour or as slow release granules.

Application can be to any part of the plant including the foliage, stems, branches or roots, or to soil surrounding the roots, or to the seed before it is planted, or to the soil generally, to paddy water, to irrigation water or to hydroponic culture systems. The invention compositions may also be injected into plants or sprayed onto vegetation using electrodynamic spraying techniques or other low volume methods.

The term "plant" as used herein includes seedlings, bushes and trees. Furthermore, the fungicidal method of the invention includes preventative, protectant, prophylactic and eradicant treatments.

The physical nature of the composition used in any instance will depend upon the particular purpose envisaged.

The compositions may be in the form of dustable powders or granules comprising the first and second active ingredients and a solid diluent or carrier, for example, fillers such as kaolin, bentonite, kieselguhr, dolomite, calcium carbonate, talc, powdered magnesia, fuller's earth, gypsum, diatomaceous earth and china clay. Such granules can be preformed granules suitable for application to the soil without further treatment. These granules can be made either by impregnating pellets of filler with the active ingredient or by pelleting a mixture of the active ingredient and powdered filler. Compositions for dressing seed may include an agent (for example, a mineral oil) for assisting the adhesion of the composition to the seed; alternatively the active ingredient can be formulated for seed dressing purposes using an organic solvent (for example, N-methylpyrrolidone, propylene glycol or N,N-dimethylformamide). The compositions may also be in the form of wet table powders or water dispersible granules comprising wetting or dispersing agents to facilitate the dispersion in liquids. The powders and granules may also contain fillers and suspending agents.

Compositions for pelleting seed comprise the first and second active ingredients, a solid carrier (such as clay or chalk) and a binding agent (such as a cellulosic or polysaccharide material).

The compositions may also be in the form of soluble powders or granules, or in the form of solutions in polar solvents.

Soluble powders may be prepared by mixing the active ingredient with a water-soluble salt such as sodium bicarbonate, sodium carbonate, magnesium sulphate or a polysaccharide, and a wetting or dispersing agent to improve water dispersibility/solubility. The mixture may then be ground to a fine powder. Similar compositions may also be granulated to form water-soluble granules. Solutions may be prepared by dissolving the active ingredient in polar solvents such as ketones, alcohols and glycol ethers. These solutions may contain surface active agents to improve water dilution and prevent crystallisation in a spray tank.

Emulsifiable concentrates or emulsions may be prepared by dissolving the active ingredient in an organic solvent optionally containing a wetting or emulsifying agent and then adding the mixture to water which may also contain a wetting or emulsifying agent. Suitable organic solvents are aromatic solvents such as alkylbenzenes and alkylnaphthalenes, ketones such as cyclohexanone and methylcyclohexanone, chlorinated hydrocarbons such as chlorobenzene and trichlorethane, and alcohols such as benzyl alcohol, furfuryl alcohol, butanol and glycol ethers.

Suspension concentrates of largely insoluble solids may be prepared by ball or bead milling with a dispersing agent with a suspending agent included to stop the solid settling.

Compositions to be used as sprays may be in the form of aerosols wherein the formulation is held in a container under pressure of a propellant, e.g. fluorotrichloromethane or dichlorodifluoromethane.

The first and second active ingredients can be mixed in the dry state with a pyrotechnic mixture to form a composition suitable for generating in enclosed spaces a smoke containing the active ingredients.

Alternatively, the compositions may be used in micro-encapsulated form. They may also be formulated in biodegradable polymeric formulations to obtain a slow, controlled release of the active substance.

By including suitable additives, for example additives for improving the uptake, distribution, adhesive power and resistance to rain on treated surfaces, the different compositions can be better adapted for various utilities. Other additives may be included to improve the biological efficacy of the various formulations. Such additives can be surface active materials to improve the wetting and retention on surfaces treated with the formulation and also the uptake and mobility of the active material, or additionally can include oil based spray additives, for example, certain mineral oil and natural plant oil (such as soya bean and rape seed oil) additives, or blends of them with other adjuvants, have been found to enhance several-fold foliar activity against, for example, Puccinia hordei.

The invention compositions can be used as mixtures with fertilisers (e.g. nitrogen-, potassium- or phosphorus-containing fertilisers). Granules comprising only pieces of fertiliser incorporating, for example coated with, the composition are preferred. Such granules suitably contain up to 25% by weight of the first and second active ingredients. The invention therefore also provides a fertiliser and a composition of the invention.

Wettable powders, emulsifiable concentrates and suspension concentrates will normally contain surfactants, e.g. a wetting agent, dispersing agent, emulsifying agent or suspending agent. These agents can be cationic, anionic or non-ionic agents.

Suitable cationic agents are quaternary ammonium compounds, for example, cetyltrimethylammonium bromide. Suitable anionic agents are soaps, salts of aliphatic monoesters of sulphuric acid (for example, sodium lauryl sulphate), and salts of sulphonated aromatic compounds (for example, sodium dodecylbenzenesulphonate, sodium, calcium or ammonium lignosulphonate, butylnaphthalene sulphonate, and a mixture of sodium diisopropyl- and triisopropylnaphthalene sulphonates).

Suitable non-ionic agents are the condensation products of ethylene oxide with fatty alcohols such as oleyl or cetyl alcohol, or with alkyl phenols such as octyl- or nonylphenol and octylcresol. Other non-ionic agents are the partial esters derived from long chain fatty acids and hexitol anhydrides, the condensation products of the said partial esters with ethylene oxide, and the lecithins. Suitable suspending agents are hydrophilic colloids (for example, polyvinylpyrrolidone and sodium carboxymethylcellulose), and swelling clays such as bentonite or attapulgite.

Compositions for use as aqueous dispersions or emulsions are generally supplied in the form of a concentrate containing a high proportion of the active ingredient, the concentrate being diluted with water before use. These concentrates should preferably be able to withstand storage for prolonged periods and after such storage be capable of dilution with water in order to form aqueous preparations which remain homogeneous for a sufficient time to enable them to be applied by conventional spray equipment. The concentrates may conveniently contain up to 95%, suitably 1-85%, for example 1-25% or 25-60%, by weight of the active ingredients. After dilution to form aqueous preparations, such preparations may contain varying amounts of the active ingredient depending upon the intended purpose, but an aqueous preparation containing 0.0001 to 10%, for example 0.005 to 10%, by weight of active ingredient may be used.

The compositions of this invention may contain other compounds having biological activity, e.g. compounds having similar or complementary fungicidal activity or which possess plant growth regulating, herbicidal or insecticidal activity.

An additional fungicidal compound may be present in the composition of the invention. By including another fungicide, the resulting composition can have a broader spectrum of activity or a greater level of intrinsic activity than the composition of the invention alone. Examples of fungicidal compounds which may be included in the composition of the invention are (±)-cis-1-(4-chlorophenyl)-2-(1H-1,2,4-triazol-1-yl)-cycloheptanol, (2RS,3RS)-1-[3-(2-chlorophenyl)-2-(4-fluorophenyl)-oxiran-2-ylmethyl]-1H-1,2,4-triazole, (RS)-1-aminopropylphosphonic acid, (RS)-4-(4-chlorophenyl)-2-phenyl-2-(1H-1,2,4-triazol-1-ylmethyl)butyronitrile, (Z)-N-but-2-enyloxymethyl-2-chloro-2'6'-diethylacetanilide, 1-(2-cyano-2-methoxyiminoacetyl)-3-ethyl urea, 3-(2,4-dichlorophenyl)-2-(1H-1,2,4-triazol-1-yl)quinazolin-4(3H)-one, 4-(2,2-difluoro-1,3-benzodioxol-4-yl)pyrrole-3-carbonitrile, 4-bromo-2-cyano-N,N-dimethyl-6-trifluoromethylbenzimidazole-1-sulphonamide, 5-ethyl-5,8-dihydro-8-oxo-(1,3)-dioxol-(4,5-g)quinoline-7-carboxylic acid, α-[N-(3-chloro-2,6-xylyl)-2-methoxyacetamido]-g-butyrolactone, alanycarb, aldimorph, ampropylfos, anilazine, azaconazole, BAS 490F, benalaxyl, benomyl, biloxazol, binapacryl, bitertanol, blasticidin S, bromuconazole, bupirimate, butenachlor, buthiobate, captafol, captan, carbendazim, carbendazim chlorhydrate, carboxin, chinomethionate, chlorbenzthiazone, chloroneb, chlorothalonil, chlorozolinate, clozylacon, copper containing compounds such as copper oxychloride, copper oxyquinolate, copper sulphate and Bordeaux mixture, cycloheximide, cymoxanil, cyprofuram, di-2-pyridyl disulphide 1,1'-dioxide, dichlofluanid, dichlone, diclobutrazol, diclomezine, dicloran, didecyl dimethyl ammonium chloride, diethofencarb, difenoconazole O,O-di-iso-propyl-S-benzyl thiophosphate, dimefluazole, dimetconazole, dimethomorph, dimethirimol, diniconazole, dinocap, dipyrithione, ditalimfos, dithianon, dodemorph, dodine, doguadine, edifenphos, epoxiconazole, etaconazole, ethirimol, ethoxyquin, ethyl (Z)-N-benzyl-N-([methyl (methyl-thioethylideneamino-oxycarbonyl)amino]thio)-β-alaninate, etridiazole, fenaminosulph, fenapanil, fenarimol, fenbuconazole, fenfuram, fenpiclonil, fenpropidin, fenpropimorph, fentin acetate, fentin hydroxide, ferbam, ferimzone, fluazinam, fluoroimide, fluotrimazole, flutolanil, flutriafol, flusilazole, folpet, fuberidazole, furalaxyl, furconazole-cis, guazatine, hydroxyisoxazole, hymexazole, imazalil, imibenconazole, ipconazole, iprobenfos, iprodione, isopropanyl butyl carbamate, isoprothiolane, kasugamycin, mancozeb, maneb, mepanipyrim, mepronil, metalaxyl, metconazole, methfuroxam, metiram, metiram-zinc, metsulfovax, myclobutanil, neoasozin, nickel dimethyldithiocarbamate, nitrothal-isopropyl, nuarimol, ofurace, organomercury compounds, oxadixyl, oxolinic acid, oxycarboxin, pefurazoate, penconazole, pencycuron, phenazin oxide, phosetyl-Al, phosphorus acids, phthalide, polyoxin D, polyram, probenazole, prochloraz, procymidone, propamocarb, propamocarb hydrochloride, propiconazole, propineb, propionic acid, prothiocarb, pyracarbolid, pyrazophos, pyrifenox, pyroquilon, pyroxyfur, pyrrolnitrin, quaternary ammonium compounds, quinconazole, quinomethionate, quintozene, rabenazole, sodium pentachlorophenate, SSF 126, streptomycin, sulphur, techlofthalam, tecnazene, tetraconazole, thiabendazole, thicarbanil, thicyofen, 2-(thiocyanomethylthio)benzothiazole thiophanate-methyl, thiram, timibenconazole, tolclofos-methyl, tolylfluanid, triacetate salt of 1,1'-iminodi-(octamethylene)diguanidine, triadimefon, triadimenol, triazbutyl, triazoxide, tricyclazole, tridemorph, triforine, triflumizole, triticonazole, validamycin A, vapam, vinclozolin, zineb and ziram.

Suitable insecticides which may be incorporated in a composition of the present invention include natural pyrethrins or pyrethroids such as permethrin, fenvalerate, deltamethrin, cyhalothrin, lambda-cyhalothrin, cypermethrin, α- and β-cypermethrin, cycloprothrin, tefluthrin, empenthrin, ethofenprox, tetramethrin, bioallethrin, fenfluthrin, prallethrin, 5-benzyl-3-furylmethyl (E)-(1R,3S)-2,2-dimethyl-3-(2-oxothiolan-3-yl-idenemethyl)cyclopropane carboxylate and pentafluorobenzyl (cis)-3-[2-fluoro-2-(methoxycarbonyl)ethenyl]-2,2-dimethylcyclopropane carboxylate; organophosphates such as profenofos, propaphos, sulprofos, dichlorvos, methyl parathion, azinphos-methyl, demeton-s-methyl, heptenophos, thiometon, fenamiphos, monocrotophos, triazophos, methamidophos, dimethoate, phenthoate, phosphamidon, malathion, chlorpyrifos, phosalone, fensulphothion, fenthion, formothion, isoxathion, fonofos, phorate, phoxim, pyrimiphos-methyl, fenitrothion and diazinon; carbamates (including aryl carbamates) such as pirimicarb, cloethocarb, carbofuran, carbonyl, isoprocarb, ethiofencarb, aldicarb, thiofurox, carbosulfan, bendiocarb, fenobucarb, propoxur, oxamyl and XMC; benzoyl ureas such as triflumuron and chlorofluazuron; organic tin compounds such as cyhexatin, fenbutatin oxide and azocyclotin; macrolides such as avermectins or milbemycins, for example abamectin, avermectin and milbemycin; hormones and synthetic mimics thereof such as juvenile hormone, juvabione, ecdysones, methoprene and hydroprene; pheromones; and organochlorine compounds such as benzene hexachloride, DDT, chlordane, dieldrin and endosulfan.

In addition to the major chemical classes of insecticide listed above, other insecticides having particular targets may be employed in the mixture an appropriate. For instance selective insecticides for particular crops, for example

stem borer specific insecticides for use in rice such as cartap or buprofezin, can be employed. Alternatively, insecticides or acaricides specific for the control of specific insect growth stages, for example ovolarvicides such as clofentezine, amitraz, chlordimeform, flubenzimine, hexythiazox and tetradifon; motilicides such as dicofol or propargite; adulticides such as bromopropylate, chlorobenzilate; or insect growth regulators such as hydramethylnon, cyromazine, methoprene, chlorfluazuron and diflubenzuron may also be included in the compositions.

Examples of suitable insecticide synergists for use in the compositions include piperonyl butoxide, sesamex and dodecyl imidazole.

Plant growth regulating compounds are compounds which control weeds or seedhead, formation, or selectively control the growth of less desirable plants (e.g. grasses).

Examples of suitable plant growth regulating compounds for use in the compositions of the present invention are 1-(4-chlorophenyl)-4,6-di-methyl-2-oxo-1,2-dihydropyridine-3-carboxylic acid; methyl-3,6-dichloroanisate; abscisic acid; daminozide; difenzoquat; dikegulac; ethephon; fenpentezol; fluoridamid; inabenfide; isopyrimol; long chain fatty alcohols and acids; maleic hydrazide; mefluidide; fenchlorazole-ethyl; choline chloride; ethephon; morphactins (e.g. chlorfluoroecol); paclobutrazol; substituted benzoic acid (e.g. triiodobenzoic acid); substituted quaternary ammonium and phosphonium compounds (e.g. chloromequat, chlorphonium or mepiquat chloride); tecnazene; the auxins (e.g. indoleacetic acid, indolebutyric acid, naphthylacetic acid or naphthoxyacetic acid); the cytokinins (e.g. benzimidazole, benzyladenine, benzylaminopurine, diphenylurea or kinetin); the gibberellins (e.g. $GA_3$, $GA_4$ or $GA_7$); triapenthenol; benzo-2,1,3-thiadiazin-4-one-2,2-dioxides such as bentazone; hormone herbicides, particularly the phenoxy alkanoic acids such as MCPA, MCPA-thioethyl, dichlorprop, 2,4,5-T, MCPB, 2,4-D, 2,4-DB, mecoprop, trichlopyr, fluroxypyr, clopyralid, and their derivatives (eg. salts, esters and amides); 1,3 dimethylpyrazole derivatives such as pyrazoxyfen, pyrazolate and benzofenap; Dinitrophenols and their derivatives (eg. acetates) such as dinoterb, dinoseb and its ester, dinoseb acetate; dinitroaniline herbicides such as dinitramine, trifluralin, ethalfluralin, pendimethalin, oryzalin; arylurea herbicides such as diuron, flumeturon, metoxuron, neburon, isoproturon, chlorotoluron, chloroxuron, linuron, monolinuron, chlorobromuron, daimuron, methabenzthiazuron; phenylcarbamoyloxyphenylcarbamates such as phenmedipham and desmedipham; 2-phenylpyridazin-3-ones such as chloridazon and norflurazon; uracil herbicides such as lenacil, bromacil and terbacil; triazine herbicides such as atrazine, simazine, aziprotryne, cyanazine, prometryn, dimethametryn, simetryne, and terbutryn; phosphorothioate herbicides such as piperophos, bensulide, and butamifos; thiolcarbamate herbicides such as cycloate, vernolate, molinate, thiobencarb, butylate*, EPTC*, tri-allate, di-allate, esprocarb, thiocarbazil, pyridate, and dimepiperate; 1,2,4-triazin-5-one herbicides such as metamitron and metribuzin; benzoic acid herbicides such as 2,3,6-TBA, dicamba and chloramben; anilide herbicides such as pretilachlor, butachlor, alachlor, propachlor, propanil, metazachlor, metolachlor, acetochlor, and dimethachlor; dihalobenzonitrile herbicides such as dichlobenil, bromoxynil and ioxynil; haloalkanoic herbicides such as dalapon, TCA and salts thereof; diphenylether herbicides such as lactofen, fluroglycofen or salts or ester thereof, nitrofen, bifenox, aciflurofen and salts and esters thereof, oxyfluorfen, fomesafen, chlornitrofen and chlomethoxyfen; phenoxyphenoxypropionate herbicides such as diclofop and esters thereof such as the methyl ester, fluazifop and esters thereof, benzoylprop and esters thereof, haloxyfop and esters thereof, quizalofop and esters thereof and fenoxaprop and esters thereof such as the ethyl ester; cyclohexanedione herbicides such as alloxydim and salts thereof, sethoxydim, cycloxyidim, tralkoxydim, and clethodim; sulfonyl urea herbicides such as chlorosulfuron, sulfometuron, metsulfuron and esters thereof; benzsulfuron and esters thereof such as DPX-M6313, chlorimuron and esters such as the ethyl ester thereof pirimisulfuron and esters such as the methyl ester thereof, 2-[3-(4-methoxy-6-methyl-1,3,5-triazin-zyl)-3-methylureido-sulphonyl) benzoic acid esters such as the methyl ester thereof (DPX-LS300) and pyrazosulfuron; imidazolidinone herbicides such as imazaquin, imazamethabenz, imazapyr and isopropylammonium salts thereof, imazethapyr; arylanilide herbicides such as flamprop and esters thereof, benzoylprop-ethyl, diflufenican; amino acid herbicides such as glyphosate and glufosinate and their salts and esters, sulphosate and bialaphos; organoarsenical herbicides such as monosodium methanearsonate (MSMA); herbicidal amide derivative such as napropamide, propyzamide, asulam, carbetamide, tebutam, bromobutide, isoxaben, naproanilide and naptalam; miscellaneous herbicides including ethofumesate, cinmethylin, difenzoquat and salts thereof such as the methyl sulphate salt, clomazone, oxadiazon, bromofenoxim, barban, tridiphane, flurochloridone, quinclorac, dithiopyr and mefanacet; and contact herbicides (such as bipyridylium herbicides for example those in which the active entity is paraquat and those in which the active entity is diquat), and mixtures of any of the foregoing. (* These compounds are preferably employed in combination with a safener such as dichlormid.)

The following Examples illustrate the invention.

EXAMPLE 1

Testing of a composition of the invention against Puccinia hordei (barley brown rust) in a field test on barley in test area $20m^2$ (four replicates).

The compounds were applied as suspension concentrate formulations with a tank-mixed adjuvant and were diluted with water to the required concentration.

The compounds were applied using knapsack sprayers in a water volume of 300 l/ha. Two applications were made between GSZ 30 and GSZ 65 depending upon disease pressure and local recommendations (GSZ = Zadoks Growth Stage). Disease control was assessed as percentage brown rust on specific leaves by visual estimation of 25 tillers per plot.

Results are expressed as mean absolute percentage disease levels, and untreated plots had a mean absolute disease level of 80.40%.

| Application rate g ai/ha | | Mean absolute disease level (on leaf 2; 15 days after application 2) |
|---|---|---|
| Compound (I) | Compound (IV) | |
| 25 | 0 | 33.51% |
| 0 | 31.25 | 26.76% |
| 25 | 31.25 | 6.65% |

EXAMPLE 2

Testing of a composition of the invention against Venturia inaequalis (apple scab).

Young apple seedlings were grown in 3.8cm (1.5") diameter plastic pots containing John Innes Potting Compost (No. 1).

The test compounds, formulated as suspension concentrates or a solution in acetone, were diluted in water to the required concentration immediately before application.

The test compounds were applied to the underside of the apple seedling leaves either one day before (protectant) or three days after (eradicant) a suspension of Venturia inaequalis spores was applied to the same surface.

After inoculation, the plants were put into an appropriate environment to allow infection to proceed and then incubated until the disease was ready for assessment (10-12 days after inoculation). Venturia inaequalis infection was assessed as the percentage area of sporulating disease on a leaf in comparison with the untreated control. Four replicate plants were assessed per treatment.

| Eradicant Treatment | | |
|---|---|---|
| Application rate ppm ai | | Percentage area of sporulating disease |
| Compound (I) | Compound (III) | |
| 0.2 | 0 | 70.7 |
| 0 | 0.2 | 76.9 |
| 0.2 | 0.2 | 14.1 |

| Protectant Treatment | | |
|---|---|---|
| Application rate ppm ai | | Percentage area of sporulating disease |
| Compound (I) | Compound (III) | |
| 0.2 | 0 | 74.5 |
| 0 | 0.2 | 109 |
| 0.2 | 0.2 | 20.4 |

These Examples give data for the two components present in the compositions. By using Limpel's formula, these data demonstrate that the observed activity of the compositions comprising two active ingredients is greater than would be expected.

Limpel's formula (Pesticide Science (1987) 19 309-315 at 312) is:

$$E = X+Y - \frac{XY}{100}$$

in which

E is the expected fungicidal activity of substances A+B at p+q Kg/ha;
X is the percentage fungicidal activity of substance A at a rate of p kg active ingredient/ha; and
Y is the percentage fungicidal activity of substance B at a rate of q kg active ingredient/ha.

If the fungicidal activity observed is greater than the value E calculated according to Limpel, then the combination of A and B is synergistic.

CHEMICAL FORMULAE

(IN DESCRIPTION)

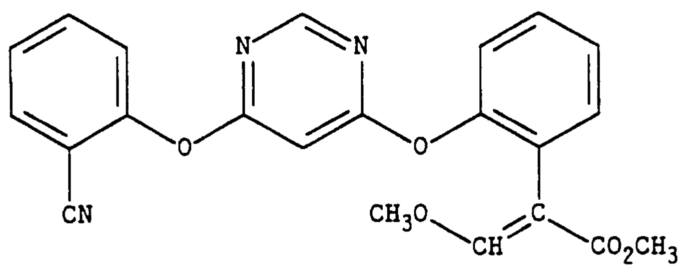

(I)

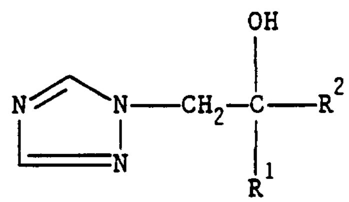

(II)

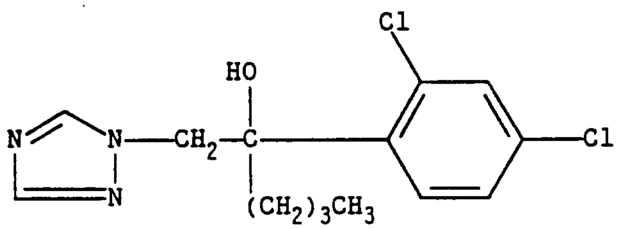

(III)

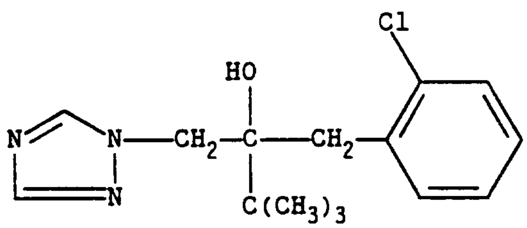

(IV)

## Claims

1. A fungicidal composition comprising a carrier or diluent; a first active ingredient which is a compound of formula (I):

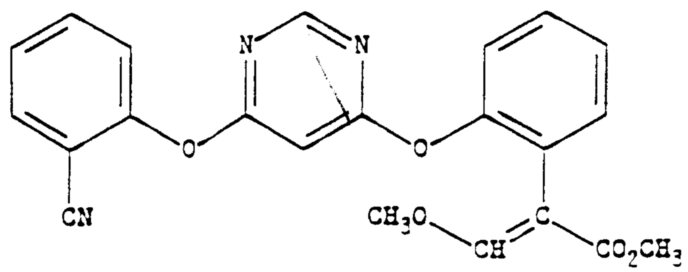

(I)

and a second active ingredient which is a compound of formula (II):

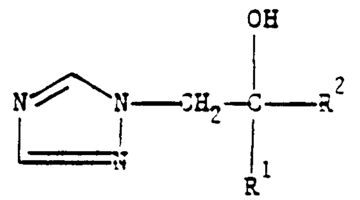

(II)

wherein $R^1$ is $C_{1-4}$ alkyl or $C_{3-6}$ cycloalkyl($C_{1-4}$)alkyl; and $R^2$ is phenyl or phenyl($C_{1-4}$)alkyl; wherein the foregoing phenyl moieties are substituted with halogen; wherein the weight ratio of the first active ingredient to the second active ingredient is in the range from 400:1 to 10:90, and the relative amounts of the first and second active ingredients being such as to produce a synergistic effect.

2. A fungicidal composition as claimed in claim 1 wherein the second active ingredient is a compound of formula (III) or (IV).

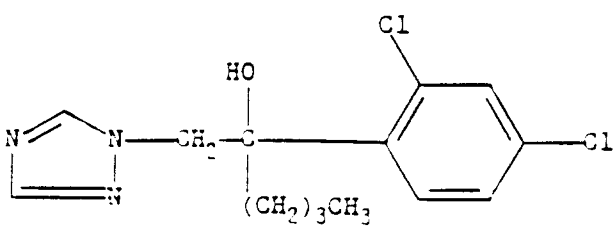

(III)

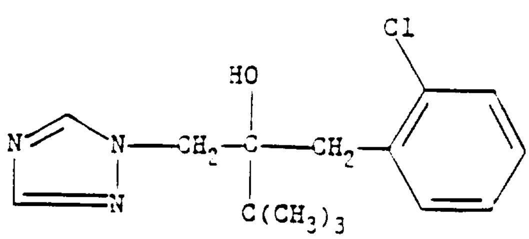

(IV)

3. A method of combating fungal infections of plants comprising applying to a plant, to the seed of a plant or to the locus of a seed or plant a fungicidally effective amount of a composition as claimed in claim 1.

4. A method of combating fungal infections of plants caused by Puccinia spp, the method comprising applying to the plant, to the seed of the plant or to the locus of the plant or seed a fungicidal composition comprising a diluent or carrier; a first active ingredient which is a compound of formula (I); and a second active ingredient which is a compound of formula (IV); wherein the weight ratio of the first active ingredient to the second active ingredient is in the range from 400:1 to 10:90, the relative amounts of the first and second active ingredients being such as to produce a synergistic effect.

5. A method of combating fungal infections of plants caused by Venturia spp, the method comprising applying to the plant, to the seed of the plant or to the locus of the seed or plant a fungicidal composition comprising a diluent or carrier; a first active ingredient which is a compound of formula (I); and a second active ingredient which is a compound of formula (III); wherein the weight ratio of the first active ingredient to the second active ingredient is in the range from 400:1 to 10:90, the relative amounts of the first and second active ingredients being such as to produce a synergistic effect.

**Patentansprüche**

1. Fungicide Zusammensetzung, die folgendes enthält: einen Trägerstoff oder Streckstoff, einen ersten wirksamen Inhaltsstoff, bei dem es sich um eine Verbindung mit der folgenden Formel (I) handelt:

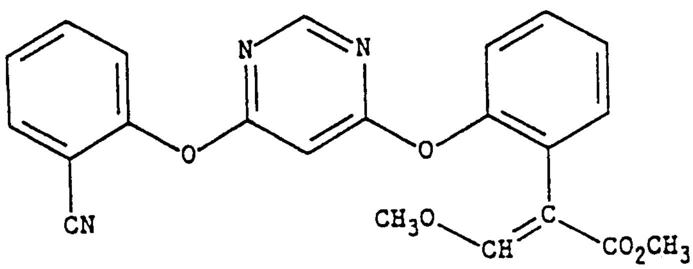

(I)

und einen zweiten wirksamen Inhaltsstoff, bei dem es sich um eine Verbindung mit der folgenden Formel (II) handelt:

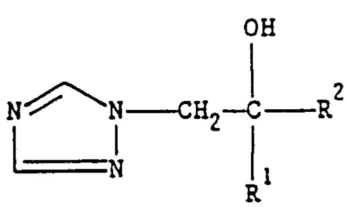

(II)

in der $R^1$ für $C_{1-4}$-Alkyl oder $C_{3-6}$-Cycloalkyl($C_{1-4}$)alkyl steht und $R^2$ für Phenyl oder Phenyl($C_{1-4}$)alkyl steht, wobei die vorstehenden Phenyl-Reste mit Halogen substituiert sind und das Gewichtsverhältnis erster wirksamer Inhaltsstoff:zweiter wirksamer Inhaltsstoff im Bereich von 400:1 bis 10:90 liegt und die relativen Mengen an dem ersten und dem zweiten wirksamen Inhaltsstoff derart sind, daß eine synergistische Wirkung erzeugt wird.

2. Fungicide Zusammensetzung nach Anspruch 1, wobei der zweite wirksame Inhaltsstoff eine Verbindung mit der folgenden Formel (III) oder (IV) ist:

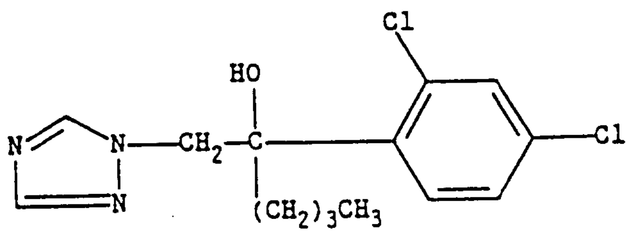

(III)

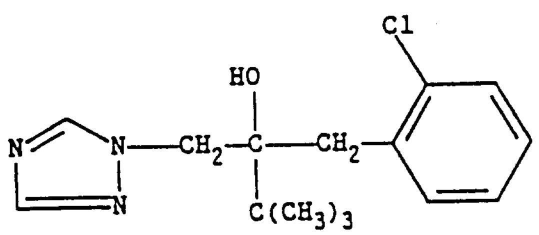

(IV)

3. Verfahren zur Bekämpfung von Pilzinfektionen von Pflanzen, bei dem eine fungicid wirksame Menge einer Zusammensetzung nach Anspruch 1 auf eine Pflanze, auf das Saatgut einer Pflanze oder auf den Standort des Saatguts oder Pflanze aufgebracht wird.

4. Verfahren zur Bekämpfung von durch Puccinia-Spezies verursachten Pilzinfektionen von Pflanzen, bei dem auf die Pflanze, auf das Saatgut der Pflanze oder auf den Standort der Pflanze oder des Saatguts eine fungicide Zusammensetzung aufgebracht wird, die folgendes enthält: einen Streckstoff oder Trägerstoff, einen ersten wirksamen Inhaltsstoff, bei dem es sich um eine Verbindung mit der Formel (I) handelt, und einen zweiten wirksamen Inhaltsstoff, bei dem es sich um eine Verbindung mit der Formel (IV) handelt, wobei das Gewichtsverhältnis erster wirksamer Inhaltsstoff:zweiter wirksamer Inhaltsstoff im Bereich von 400:1 bis 10:90 liegt und die relativen Mengen an dem ersten und dem zweiten wirksamen Inhaltsstoff derart sind, daß ein synergistischer Effekt erzeugt wird.

5. Verfahren zur Bekämpfung von durch Venturia-Spezies verursachten Pilzinfektionen von Pflanzen, bei dem auf die Pflanze, auf das Saatgut der Pflanze oder auf den Standort der Pflanze oder des Saatguts eine fungicide Zusammensetzung aufgebracht wird, die folgendes enthält: einen Streckstoff oder Trägerstoff, einen ersten wirksamen Inhaltsstoff, bei dem es sich um eine Verbindung mit der Formel (I) handelt, und einen zweiten wirksamen Inhaltsstoff, bei dem es sich um eine Verbindung mit der Formel (III) handelt, wobei das Gewichtsverhältnis erster wirksamer Inhaltsstoff:zweiter wirksamer Inhaltsstoff im Bereich von 400:1 bis 10:90 liegt und die relativen Mengen an dem ersten und dem zweiten wirksamen Inhaltsstoff derart sind, daß ein synergistischer Effekt erzeugt wird.

**Revendications**

1. Composition fongicide comprenant un support ou diluant ; un premier ingrédient actif qui est un composé de formule (I) :

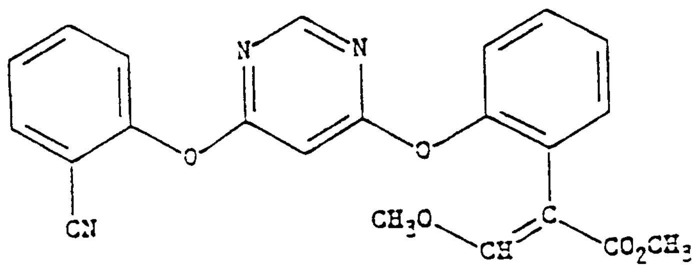

(I)

et un second ingrédient actif qui est un composé de formule (II) :

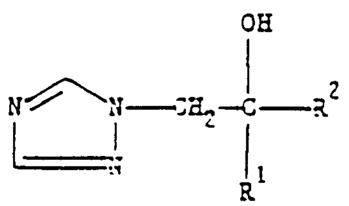

(II)

dans laquelle $R^1$ représente un groupe alkyle en $C_1$ à $C_4$ ou (cycloalkyle en $C_3$ à $C_6$)-(alkyle en $C_1$ à $C_4$) ; et $R^2$ représente un groupe phényle ou phényl-(alkyle en $C_1$ à $C_4$) ; les groupements phényle précités étant substitués avec un halogène ; composition dans laquelle le rapport pondéral du premier ingrédient actif au second ingrédient actif est compris dans l'intervalle de 400:1 à 10:90, et les quantités relatives des premier et second ingrédients actifs sont choisies de manière à obtenir un effet synergique.

2. Composition fongicide suivant la revendication 1, dans laquelle le second ingrédient actif est un composé de formule (III) ou (IV)

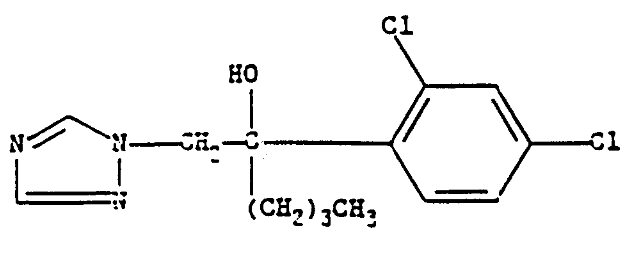

(III)

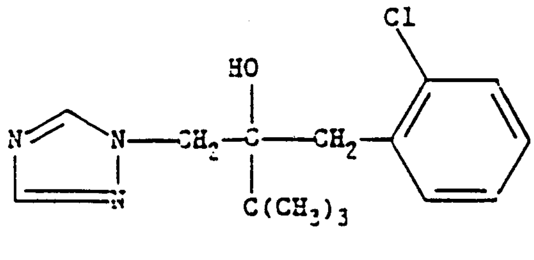

(IV)

**3.** Procédé pour combattre des infections fongiques de végétaux, comprenant l'application à une plante, aux semences d'une plante ou au milieu dans lequel se trouvent les semences ou la plante d'une quantité à effet fongicide d'une composition suivant la revendication 1.

**4.** Procédé pour combattre des infections fongiques chez des végétaux provoquées par <u>Puccinia</u> spp, ledit procédé comprenant l'application à la plante, aux semences de la plante ou au milieu dans lequel se trouvent la plante ou les semences d'une composition fongicide comprenant un diluant ou support ; un premier ingrédient actif qui est un composé de formule (I) ; et un second ingrédient actif qui est un composé de formule (IV) ; composition dans laquelle le rapport pondéral du premier ingrédient actif au second ingrédient actif est compris dans l'intervalle de 400:1 à 10:90, les quantités relatives des premier et second ingrédients actifs étant choisies de manière à produire un effet synergique.

**5.** Procédé pour combattre des infections fongiques de plantes provoquées par <u>Venturia</u> spp, ledit procédé comprenant l'application à la plante, aux semences de la plante ou au milieu dans lequel se trouvent les semences ou la plante d'une composition fongicide comprenant un diluant ou support ; un premier ingrédient actif qui est un composé de formule (I) ; et un second ingrédient actif qui est un composé de formule (III) ; composition dans laquelle le rapport pondéral du premier ingrédient actif au second ingrédient actif est compris dans l'intervalle de 400:1 à 10:90, les quantités relatives des premier et second ingrédients actifs étant choisies de manière à produire un effet synergique.